# EUROPÄISCHE PATENTSCHRIFT

(11) **EP 3 688 308 B1**
(45) Veröffentlichungstag und Bekanntmachung des Hinweises auf die Patenterteilung: **08.09.2021**
(21) Anmeldenummer: 18752428.5
(22) Anmeldetag: 30.07.2018
(51) Int. Cl.: F04B 53/10, B60T 8/40, F16K 1/42, F16K 15/02, F16K 27/02

(54) **DRUCKMITTELSTEUERVENTIL, INSBESONDERE ZUR STEUERUNG EINER DURCHSTRÖMUNGSRICHTUNG IN EINEM DRUCKMITTELKREIS UND KOLBENPUMPE, INSBESONDERE ZUR FÖRDERUNG EINES DRUCKMITTELS IN EINER ELEKTRONISCH SCHLUPFREGELBAREN FAHRZEUGBREMSANLAGE**
PRESSURE-MEDIUM CONTROL VALVE, PARTICULARLY FOR CONTROLLING A THROUGHFLOW DIRECTION IN A PRESSURE-MEDIUM CIRCUIT, AND PISTON PUMP, PARTICULARLY FOR PUMPING A PRESSURE MEDIUM IN AN ELECTRONICALLY SLIP-CONTROLLABLE VEHICLE BRAKE SYSTEM
VANNE DE COMMANDE DE FLUIDE SOUS PRESSION, NOTAMMENT DESTINÉE À COMMANDER UN SENS DE CIRCULATION DANS UN CIRCUIT DE FLUIDE SOUS PRESSION ET POMPE À PISTON, NOTAMMENT DESTINÉE À REFOULER UN FLUIDE SOUS PRESSION DANS UN SYSTÈME DE FREINAGE DE VÉHICULE À RÉGULATION ÉLECTRONIQUE DU PATINAGE

(30) Priorität: 25.09.2017 DE 102017216900
(43) Veröffentlichungstag der Anmeldung: 05.08.2020
(73) Patentinhaber: Robert Bosch GmbH, 70442 Stuttgart (DE)
(72) Erfinder: KURZ, Edgar, 74081 Heilbronn-Horkheim (DE); HAECKER, Juergen, 71701 Schwieberdingen (DE)
(86) Internationale Anmeldenummer: PCT/EP2018/070542
(87) Internationale Veröffentlichungsnummer: WO 2019/057374

(56) Entgegenhaltungen:
- EP-A2- 0 268 520
- DE-A1-102009 054 933
- DE-A1-102012 219 820
- DE-A1-102012 223 119
- DE-A1-102013 210 419
- KR-A- 20120 103 864
- US-A1- 2012 227 837
- US-A1- 2013 199 636
- US-B1- 6 244 295

## Beschreibung

### Stand der Technik

Die Erfindung betrifft ein Druckmittelsteuerventil, insbesondere zur Steuerung einer Durchströmungsrichtung in einem Druckmittelkreis nach den Merkmalen des Oberbegriffs des Anspruchs 1 sowie eine Kolbenpumpe, insbesondere zur Förderung eines Druckmittels in einer elektronisch schlupfregelbaren Fahrzeugbremsanlage nach Anspruch 3.

Ein Druckmittelsteuerventil nach den Merkmalen des Oberbegriffs des Anspruch 1 ist beispielsweise bekannt aus der US 6,244,295 B1. Bei diesem Druckmittelsteuerventil handelt es sich um ein Rückschlagventil mit einem spritzgusstechnisch hergestellten Ventilgehäuse aus Kunststoff oder Metall. Das Ventilgehäuse gliedert sich in Gehäuseabschnitte mit unterschiedlich dick ausgeführten Wandungsquerschnitten.

Ein weiteres Druckmittelsteuerventil offenbart die DE 10 2010 040 329 A1. Dieses bekannte Druckmittelsteuerventil hat ein Ventilgehäuse, einen im Inneren dieses Ventilgehäuses axial beweglich aufgenommenen und radial geführten Ventilschließkörper und einen Ventilsitz, der in Abhängigkeit einer bestehenden Druckdifferenz zwischen den Drücken stromaufwärts und stromabwärts dieses Ventilsitzes vom Ventilschließkörper gesteuert ist.

Das Ventilgehäuse ist umformtechnisch durch Tiefziehen hergestellt. Es ist becherförmig ausgebildet und weist an seinem vom Ventilsitz abgewandten Ende einen das Ventilgehäuse verschließenden Boden auf.

Der vom Ventilschließkörper gesteuerte Ventilsitz ist losgelöst vom Ventilgehäuse an einer Zylinderlaufbuchse einer Kolbenpumpe angeordnet.

### Vorteile der Erfindung

Ein Druckmittelsteuerventil nach den Merkmalen des Anspruchs 1 weist einen Ventilsitz auf, der in einem Stück mit dem umformtechnisch hergestellten Ventilgehäuse ausgebildet ist. Das Ventilgehäuse mit dem Ventilsitz ist kostengünstig durch Tiefziehen einer Blechplatine herstellbar und weist darüber hinaus kompakte Außenabmessungen auf. Die Ausführung in einem Stück ermöglicht eine besonders geringe Koaxialitätsabweichung zwischen der Führung des Ventilschließkörpers und dem Ventilsitz. Dadurch lässt sich der Ventilschließkörper besonders eng, d.h. mit geringem Spiel führen, was sich wiederum günstig hinsichtlich einer Minimierung einer Umströmung des Ventilschließkörpers mit Druckmittel sowie einer Neigung des Ventilschließkörpers zu unerwünschten Schwingungen auswirkt. Im Ergebnis wird eine Verbesserung des Betriebsgeräuschs des Druckmittelsteuerventils erreicht.

Weitere Vorteile oder vorteilhafte Weiterbildungen der Erfindung ergeben sich aus den Unteransprüchen sowie aus der nachfolgenden Beschreibung.

Ein zur Umgebung des Druckmittelsteuerventils hin offener Gehäuseschaft des Ventilgehäuses ist einerseits für den Einbau des Ventilschließkörpers und einer den Ventilschließkörper beaufschlagenden Ventilfeder in das Ventilgehäuse notwendig und gestattet es andererseits, das Ventilgehäuse mit dem Ventilsitz allein umformtechnisch durch Tiefziehen einer Blechplatine herzustellen. Aufwändige spanabhebende Arbeitsgänge zur Herstellung des Ventilgehäuses sind dadurch einsparbar.

Ein umlaufender Kragen am Ventilgehäuse gestattet eine Zentrierung des Druckmittelsteuerventils in einer zugeordneten Ventilaufnahme und ermöglicht zudem eine dichte Anlage des Druckmittelsteuerventils an einem sich anschließenden Bauteil, beispielsweise an einem Pumpenzylinder einer Kolbenpumpe. Der Kragen besteht aus Gründen der Herstellung des Ventilgehäuses durch Tiefziehen einer Blechplatine aus zwei gefalzten und aneinander angelegten Wandungsabschnitten des Ventilgehäuses und kann als Federauflage für eine den Kolben beaufschlagende Rückstellfeder einer benachbart zum Druckmittelsteuerventil angeordneten Kolbenpumpe genutzt werden.

Durch die Verwendung eines Gehäusedeckels, welcher an einem offenen Ende eines Gehäuseschafts befestigt ist und die Öffnung überdeckt kann das Druckmittelsteuerventil eine für sich funktionsfähige Baueinheit ausbilden, die vor einem technischen Einsatz auf ihre Funktionstüchtigkeit prüfbar ist.

Weiterhin ermöglicht eine derartige Gestaltung eines Druckmittelsteuerventils Freiheiten bei der Gestaltung und Herstellung benachbarter Komponenten, insbesondere bei der Herstellung eines Pumpenzylinders einer Kolbenpumpe, wenn das Druckmittelsteuerventil als Auslassventil dieser Kolbenpumpe eingesetzt wird. Grund ist, dass auf eine Ausbildung eines Ventilsitzes am Pumpenzylinder verzichtet werden kann.

Ein erfindungsgemäßes Druckmittelsteuerventil kann vorteilhafter Weise auch als Rückschlagventil in einem beliebigen Druckmittelkreis eingesetzt werden.

Wie bereits erwähnt ist die Anwendung eines erfindungsgemäßen Druckmittelsteuerventils als Auslassventil einer Kolbenpumpe aufgrund seines kostengünstigen und kompakten Aufbaus sowie aufgrund seines geräuscharmen Betriebs besonders vorteilhaft.

Eine solche Kolbenpumpe ist in einer Pumpenaufnahme eines Gehäuseblocks eines Pumpenaggregats angeordnet, wobei die Pumpenaufnahme von einem Verschlußstopfen gegenüber der Umgebung verschlossen ist. Ein Übergang zwischen zwei Durchmesserstufen einer Aufnahme dieses Verschlußstopfens kann eine Schulter ausgebilden, auf welcher das Druckmittelsteuerventil mit dem Kragen seines Ventilgehäuses aufliegt und dadurch räumlich definiert zwischen Verschlußstopfen und einem Pumpenzylinder der Kolbenpumpe einliegt.

Die Schulter kann umfangseitig von einem axial vorstehenden Bund umschlossen sein. Zwischen dem Bund und dem Kragen des Ventilgehäuses ist dadurch eine erste kraftschlüssige Verbindung darstellbar, durch welche das Ventilgehäuse am Verschlußstopfen zentriert gehalten ist. Der Bund kann weiterhin axial gegenüber dem Kragen des Ventilgehäuses vorstehen und in diesem vorstehenden Bereich eine zweite kraftschlüssige Verbindung mit einer Zylinderlaufbuchse der Kolbenpumpe ausbilden. In diesem Falle dient der Bund somit auch einer Befestigung des mit dem Druckmittelsteuerventil bestückten Verschlußstopfens am Pumpenzylinder der Kolbenpumpe.

Erstreckt sich der Gehäuseschaft des Ventilgehäuses in das Innere der Ausnehmung des Verschlußstopfens hinein, so kann zwischen dem Gehäuseschaft und der die Ausnehmung umgebenden Wand ein Ringspalt vorgesehen werden, über den eine vom Ventilsitz abgewandte Rückseite des Ventilschließkörpers mit einem Ablauf des Druckmittelsteuerventils kontaktiert ist. Damit kann relativ einfach ein Druckausgleich am Ventilschließglied realisiert werden.

### Zeichnung

Ausführungsbeispiele der Erfindung sind in der Zeichnung dargestellt und werden nachfolgend detailliert beschrieben.
Die Figur 1 zeigt ein erstes Ausführungsbeispiel eines erfindungsgemäßen Druckmittelsteuerventils, wobei dieses Druckmittelsteuerventil ein Auslassventil einer Kolbenpumpe ausbildet. Letztere ist im Längsschnitt dargestellt.
Figur 2 zeigt ist ein zweites Ausführungsbeispiel eines erfindungsgemäßen Druckmittelsteuerventils. Dieses ist als eine für sich eigenständige Baueinheit ausgeführt, welche in Figur 2 ebenfalls im Längsschnitt dargestellt ist.

Einander entsprechende Bauteile bzw. Bauteilabschnitte sind in den Figuren mit einheitlichen Bezugsziffern gekennzeichnet.

### Beschreibung der Ausführungsbeispiele

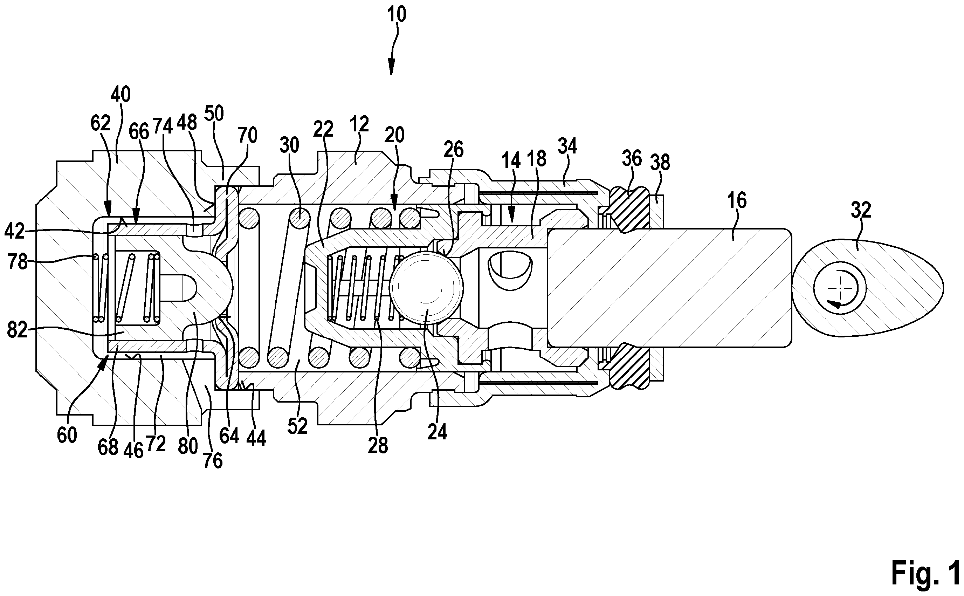

In der Figur 1 ist eine Kolbenpumpe 10 im Längsschnitt dargestellt. Diese Kolbenpumpe 10 umfasst einen Pumpenzylinder 12, in dem eine Kolbenbaugruppe 14 axial verschiebbar aufgenommen und radial geführt angeordnet ist. Die Kolbenbaugruppe 14 besteht aus einem ersten Kolbenabschnitt 16 aus zylindrischem Vollmaterial, einem sich daran anschließenden hohlzylindrischen und mit Querbohrungen versehenen zweiten Kolbenabschnitt 18 und einem an diesen zweiten Kolbenabschnitt 18 anschließenden Einlassventil 20. Letzteres umfasst ein Einlassventilgehäuse 22 in dem ein Einlassventilschließkörper 24 sowie eine den Einlassventilschließkörper 24 gegen einen Einlassventilsitz 26 beaufschlagende Einlassventilfeder 28 angeordnet sind. Der Einlassventilsitz 26 ist an einem dem Einlassventil 20 zugewandten Ende des zweiten Kolbenabschnitts 18 ausgebildet. Als Einlassventilschließkörper 24 dient eine Kugel.

Die beiden Kolbenabschnitte 16; 18 und das Einlassventil 20 sind jeweils miteinander kraftschlüssig zur Kolbenbaugruppe 14 verbunden. Diese wird entgegen der Kraft einer Rückstellfeder 30 zu einer Axialbewegung im Inneren des Pumpenzylinders 12 angetrieben. Bevorzugt wird hierfür ein rotierend antreibbarer Exzenter 32 verwendet, der auf die in der Figur oben liegende Stirnfläche des ersten Kolbenabschnitts 16 einwirkt.

An dem, den Kolbenabschnitten 16; 18 zugewandten Ende des Pumpenzylinders 12 ist ein hülsenförmiges Filterelement 34 angebracht, welches den zweiten Kolbenabschnitt 18 umschließt und welches dazu vorgesehenen ist, Druckmittel, das den Querbohrungen dieses zweiten Kolbenabschnitts 18 zufließt von eventuell enthaltenen Verunreinigungen bzw. Spänen zu reinigen. Das Filterelement 34 ist dazu aus einem Filtergerüst aufgebaut, dessen Öffnungen durch ein von Druckmittel durchströmbares Filtergewebe abgedeckt sind.

Das Filterelement 34 trägt einen Dichtungsring 36, welcher am Umfang des ersten Kolbenabschnitts 16 anliegt sowie ein den Dichtungsring 36 abstützenden Stützring 38 zur Vermeidung einer eventuellen Extrusion des Dichtungsrings 36 in einen zwischen dem ersten Kolbenabschnitt 16 und einer diesen ersten Kolbenabschnitt 16 umgebenden Wandung einer Pumpenaufnahme (nicht gezeichnet) bestehenden Spalt.

Weiterhin ist in der Figur 1 ein Verschlußstopfen 40 erkennbar. Letzterer verschließt die erwähnte, jedoch in der Figur nicht gezeigte Pumpenaufnahme eines Pumpenaggregats nach außen. Der Verschlußstopfen 40 ist becherförmig ausgeformt und weist eine mittig angeordnete und von einem Boden des Verschlußstopfens verschlossene Aufnahme 42 auf. Diese Aufnahme 42 ist in ihrem Inndurchmesser einmal rechtwinklig abgestuft und weist dementsprechend einen im Innendurchmesser größeren zum pumpenzylinderseitigen Ende hin offenen ersten Aufnahmeabschnitt 44 und einen demgegenüber kleineren und vom Boden des Verschlußstopfens 40 verschlossenen zweiten Aufnahmeabschnitt 46 auf. Ein Übergang zwischen den beiden Aufnahmeabschnitten 44; 46 ist rechtwinklig ausgeführt, so dass er eine ringförmig umlaufende Schulter 48 ausbildet. Diese Schulter 48 ist umfangseitig von einem axial vorstehenden Bund 50 des Verschlußstopfens 40 umgeben. Dieser Bund 50 erstreckt sich abschnittsweise bis über das offene Ende des Pumpenzylinders 12 hinaus. Dabei sind die Innenabmessungen des Bunds 50 auf die Außenabmessungen des Pumpenzylinders 12 derart abgestimmt, dass zwischen den Bauteilen ein eine kraftschlüssige Verbindung ausbildbar ist.

Die Kolbenpumpe 10 verfügt weiterhin über ein erfindungsgemäß ausgebildetes Auslassventil 60. Dieses Auslassventil 60 ist in der gestuften Aufnahme 42 des Verschlußstopfens 40 angeordnet und steuert zusammen mit dem Einlassventil 20 eine Durchströmung der Kolbenpumpe 10 mit hydraulischem Druckmittel. Das Auslassventil 60 besteht aus einem Auslassventilgehäuse 62, einem in einem Stück mit diesem Auslassventilgehäuse 62 ausgebildeten und an dem, dem offenen Ende des Pumpenzylinders 12 zugewandten Ende angeordneten Auslassventilsitz 64, einem im Inneren des Auslassventilgehäuses 62 aufgenommenen, axial beweglich aufgenommenen und radial geführten Auslassventilschließkörper 66 sowie einer den Auslassventilschließkörper 66 beaufschlagenden Auslassventilfeder 68. Letztere ist mit einem ersten Federende am Boden der Aufnahme 42 des Verschlußstopfens 40 abgestützt. Das Auslassventilgehäuse 62 ist umformtechnisch in einem Stück hergestellt und bildet an seinem, dem Auslassventilsitz 64 gegenüber liegenden zweiten Ende einen hohlzylindrischen, nach außen offenen Gehäuseschaft 68 aus. Im Inneren dieses Gehäuseschafts 68 ist der Auslassventilschließkörper 66 beweglich aufgenommen. Auslassventilsitz 64 und Gehäuseschaft 68 sind über einen umlaufenden und gegenüber dem Gehäuseschaft 68 radial nach außen abstehenden Kragen 70 miteinander verbunden. Der Kragen 70 ist ausgebildet aus zwei am Umfang des Kragens 70 miteinander verbunden und abschnittsweise aneinander angelegten Gehäusewandabschnitten.

Mit seinem Kragen 70 liegt das Auslassventilgehäuse 62 an der Schulter 48 der gestuften Aufnahme 42 des Verschlußstopfens 40 an. Die Außenabmessungen des Kragens 70 sind dabei auf die Innenabmessungen des die Schulter 48 umschließenden Bunds 50 derart abgestimmt, dass zwischen dem Auslassventilgehäuse 62 und dem Verschlußstopfen 40 eine kraftschlüssige Verbindung besteht, welche beide Bauteile miteinander zusammenhält. Weiterhin ist der Verschlußstopfen 40 mit dem eingebauten Druckmittelsteuerventil bzw. Auslassventil 60 so mit dem Pumpenzylinder 12 gefügt, dass der Kragen 70 des Auslassventils 60 zwischen der Schulter 48 des Verschlußstopfens 40 und der zugewandten Stirnfläche am offenen Ende des Pumpenzylinders 12 unter axialer Vorspannung einliegt.

Des Weiteren erstreckt sich der Gehäuseschaft 68 des Auslassventilgehäuses 62 in das Innere des durchmesserkleineren zweiten Aufnahmeabschnitts 46 des Verschlußstopfens 40 hinein. Zwischen dem Umfang des Gehäuseschafts 68 und der den zweiten Aufnahmeabschnitt 46 umgebenden Wand besteht dabei ein umlaufender Ringspalt 72. Dieser ist mit einer am Gehäuseschaft 68 ausgebildeten Abströmöffnung 74 des Auslassventils 60 kontaktiert und steht über das offene Ende des Gehäuseschafts 68 auch mit der vom Auslassventilsitz 64 abgewandt liegenden Rückseite des Auslassventilschließkörpers 66 in druckmittelleitender Verbindung. Ein Auslass 76 der Kolbenpumpe 10 ist an der Umfangseite des Verschlußstopfens 40 vorgesehen. Dieser Auslass 76 liegt dabei der Abströmöffnung 74 des Auslassventils 60 zumindest annähernd horizontal gegenüber, wobei sich zwischen Abströmöffnung 74 und Auslass 76 ein Abschnitt des erwähnten Ringspalts 72 erstreckt. Am Auslassventilschließkörpers 66 herrscht damit Druckgleichgewicht.

Der Auslassventilschließkörper 66 gliedert sich in einen mit dem Auslassventilsitz 64 zusammenwirkenden Kalottenabschnitt 80 und in einen einstückig damit verbundenen zylindrisch ausgebildeten Führungsabschnitt 82. Mit seinem Führungsabschnitt 82 liegt der Auslassventilschließkörper 66 an der Innenseite des Gehäuseschafts 68 an. Aufgrund der Einteiligkeit von Auslassventilsitz 64 und Auslassventilgehäuse 62 ist die erreichbare Abweichung der Koaxialität zwischen Auslassventilsitz 64 und der Führung des Auslassventilschließkörpers 66 derart gering, dass ein relativ enger Führungsspalt zwischen den Bauteilen ausreicht. Ein enger Führungsspalt verhindert eine Umströmung des Auslassventilschließkörpers 66 mit Druckmittel und beugt dadurch geräuschverursachenden Schwingungen dieses Auslassventilschließkörpers 66 vor. Der Auslassventilschließkörper 66 ist hohl ausgeführt und bildet in seinem Inneren eine Abstützfläche für ein Ende einer Auslassventilfeder 78 aus.

Die Rückstellfeder 30 der Kolbenpumpe ist in einem Pumpenarbeitsraum 52 untergebracht und ist zwischen einer am Einlassventilgehäuse 22 ausgebildeten ersten Anlagefläche und einer am Kragen 70 des Auslassventilgehäuses 62 ausgebildeten zweiten Anlagefläche eingespannt. Mit einer zyklischen Betätigung der Kolbenbaugruppe 14 durch den Exzenter 32 ändert der Pumpenarbeitsraum 52 sein Volumen und ein Druckmittel wird über das Einlassventil 20 durch den Pumpenarbeitsraum 52 zum Auslassventil 60 und von dort über die Abströmöffnung 74 zum Auslass 76 der Kolbenpumpe 10 gefördert.

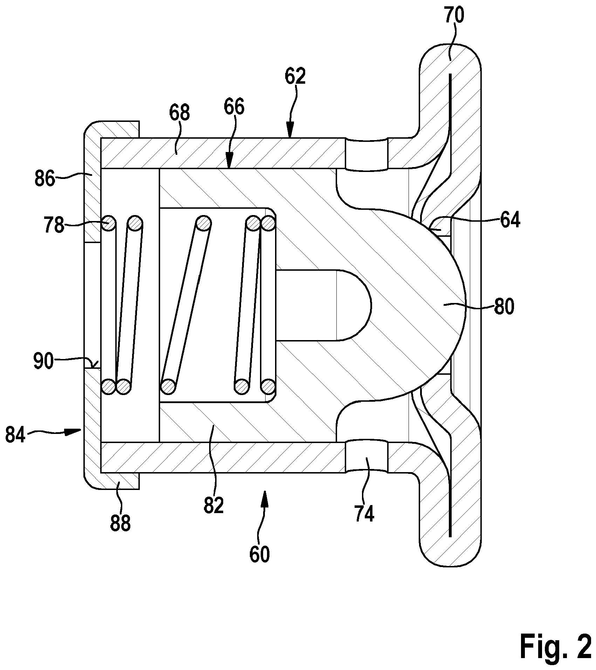

Figur 2 zeigt ein zweites Ausführungsbeispiel der Erfindung. Dieses zweite Ausführungsbeispiel betrifft ein Druckmittelsteuerventil 60, das als eigenständige für sich funktionsfähige Baueinheit ausgebildet ist. Das Druckmittelsteuerventil 60 umfasst ein Ventilgehäuse 62 mit einem einteilig daran ausgebildetem Ventilsitz 64, einen im Ventilgehäuse 62 beweglich aufgenommenen und radial geführten Ventilschließkörper 66, eine den Ventilschließkörper 66 gegen den Ventilsitz 64 beaufschlagende Ventilfeder 78 sowie einen Gehäusedeckel 84, welcher auf einen Gehäuseschaft 68 des Ventilgehäuses 62 aufgepresst ist und ein offenes Ende dieses Gehäuseschafts 68 überdeckt.

Ventilgehäuse 62, Ventilfeder 78 und Ventilschließkörper 66 sind identisch zu den in Zusammenhang mit der Beschreibung des ersten Ausführungsbeispiels beschriebenen Ventilbauteilen des Auslassventils 60 ausgeführt und sind deshalb mit denselben Bezugszeichen versehen. Ausführungsbeispiel 2 verfügt lediglich über einen zusätzlichen Gehäusedeckel 84.

Dieser Gehäusedeckel 84 ist, wie erwähnt, auf das offene Ende des Ventilgehäuses 62 aufgepresst. Er ist dazu kappenförmig ausgebildet und gliedert sich in eine weitgehend plan ausgeführte Stützfläche 86 und einen einteilig mit dieser Stützfläche 86 ausgebildeten und axial gegenüber der Stützfläche 86 vorstehenden Fortsatz 88. Dieser Fortsatz 88 ist vorzugsweise ringförmig ausgeführt, kann aber auch aus zueinander beabstandeten Ringsegmenten ausgebildet sein. Die Innenabmessungen des Fortsatzes 88 sind auf die Außenabmessungen des Gehäuseschafts 68 des Ventilgehäuses 62 entsprechend abgestimmt.

Beim Ausführungsbeispiel ist exemplarisch im Zentrum der Stützfläche 86 eine Druckausgleichsöffnung 90 vorgesehen, welche das Innere des Ventilgehäuses 62 mit dessen Umgebung verbindet. Auf einer Innenseite der Stützfläche 86 stützt sich die den Ventilschließkörper 66 beaufschlagende Ventilfeder 78 mit einem zweiten Ende ab.

Das Druckmittelsteuerventil nach Ausführungsbeispiel 2 ist eine für sich handhabbare und insbesondere auf seine Funktionsfähigkeit prüfbare Baueinheit, die losgelöst von einer Kolbenpumpe nach Ausführungsbeispiel 1 beispielsweise auch als Rückschlagventil in einem beliebigen Druckmittelkreis eingesetzt werden kann.

Selbstverständlich sind weitere Änderungen oder Weiterbildungen an den beschriebenen Ausführungsbeispielen denkbar, ohne vom Grundgedanken der Erfindung abzuweichen.

## Patentansprüche

1. Druckmittelsteuerventil (60),
insbesondere zur Steuerung einer Durchströmungsrichtung in einem Druckmittelkreis,
mit einem umformtechnisch hergestellten Ventilgehäuse (62),
einem Ventilsitz (64), der in einem Stück mit dem Ventilgehäuse (62) ausgebildet ist und
einem Ventilschließkörper (66), der axial beweglich und radial geführt im Ventilgehäuse (62) aufgenommen ist und der in Abhängigkeit der vorherrschenden Druckverhältnisse stromaufwärts und stromabwärts des Ventilsitzes (64) diesen Ventilsitz (64) steuert,
wobei am Ventilgehäuse (62) ein hohlzylindrischer, endseitig offener Gehäuseschaft (68) ausgebildet ist, in dessen Innerem der Ventilschließkörper (66) aufgenommen ist und
wobei der Ventilsitz (64) mit dem Gehäuseschaft (68) über einen umlaufenden und gegenüber dem Gehäuseschaft (68) radial nach außen abstehenden Kragen (70) verbunden ist,
**dadurch gekennzeichnet,**
**dass** der Kragen (70) des Ventilgehäuses (62) aus zwei am Umfang des Kragens (70) miteinander verbunden und aneinander angelegten Wandabschnitten des Ventilgehäuses (62) ausgebildet ist.

2. Druckmittelsteuerventil nach Anspruch 1,
**dadurch gekennzeichnet,**
**dass** an dem offenen Ende des Gehäuseschafts (68) ein Gehäusedeckel (84) befestigt ist, an dem ein den Ventilschließkörper (66) beaufschlagendes Ventilfederelement (78) abgestützt ist.

3. Kolbenpumpe (10), insbesondere zur Förderung eines Druckmittels in einer elektronisch schlupfregelbaren Fahrzeugbremsanlage,
mit einem zu einer zyklischen Hubbewegung antreibbaren Pumpenkolben (14),
einem Pumpenzylinder (12) in dem der Pumpenkolben (14) axial verschiebbar aufgenommen ist,
und einem eine Durchströmung der Kolbenpumpe (10) mit Druckmittel steuernden Druckmittelventil (60),
**dadurch gekennzeichnet,**
**dass** das Druckmittelsteuerventil (60) nach einem der Ansprüche 1 oder 2 ausgebildet ist.

4. Kolbenpumpe nach Anspruch 3,
**dadurch gekennzeichnet,**
**dass** das Druckmittelventil (60) in einer Aufnahme (42) eines Verschlußstopfens (40) aufgenommen ist, welcher eine Pumpenaufnahme in einem Gehäuseblock eines Pumpenaggregats zur Umgebung hin verschließt, wobei
die Aufnahme (42) in ihrem Innendurchmesser gestuft ausgeführt ist und einen im Inndurchmesser größeren ersten Aufnahmeabschnitt (44) und einen im Innendurchmesser demgegenüber kleineren zweiten Aufnahmeabschnitt (46) aufweist und
wobei ein Übergang vom ersten Aufnahmeabschnitt (44) zum zweiten Aufnahmeabschnitt (46) eine Schulter (48) ausbildet, auf welcher das Druckmittelventil (60) mit dem Kragen (70) des Ventilgehäuses (62) aufliegt.

5. Kolbenpumpe nach Anspruch 4,
**dadurch gekennzeichnet,**
**dass** die Schulter (48) umfangseitig von einem axial vorstehenden Bund (50) des Verschlussstopfens (40) umschlossen ist, dessen Innenabmessungen auf die Außenabmessungen des Kragens (70) des Ventilgehäuses (62) derart abgestimmt sind, dass zwischen dem Kragen (70) und dem Bund (50) eine kraftschlüssige Verbindung ausbildbar ist.

6. Kolbenpumpe nach Anspruch 5,
**dadurch gekennzeichnet,**
**dass** der Bund (50) des Verschlussstopfens (40) gegenüber dem Kragen (70) des an der Schulter (48) anliegenden Ventilgehäuses (62) bereichsweise axial vorsteht und dass der Verschlussstopfen (40) mit dem Pumpenzylinder (12) der Kolbenpumpe (10) im Bereich dieses axial vorstehenden Bunds (50) kraftschlüssig verbunden ist.

7. Kolbenpumpe nach einem der Ansprüche 4 bis 6,
**dadurch gekennzeichnet,**
**dass** sich das Ventilgehäuse (62) des Druckmittelventils (60) in den durchmesserkleineren zweiten Aufnahmeabschnitt (46) der Aufnahme (42) hinein erstreckt, wobei
zwischen dem Ventilgehäuse (62) und der den zweiten Aufnahmeabschnitt (46) der Aufnahme (42) umgebenden Wand ein mit einer vom Ventilsitz (64) abgewandten Rückseite des Ventilschließkörpers (66) kontaktierter Ringspalt (72) besteht.

## Claims

1. Pressure-medium control valve (60),
in particular for controlling a throughflow direction in a pressure-medium circuit,
having a valve housing (62) which is produced by shaping, having a valve seat (64) which is formed in one piece with the valve housing (62), and
having a valve closure body (66) which is received in an axially movable and radially guided manner in the valve housing (62) and which, in a manner dependent on the prevailing pressure conditions upstream and downstream of the valve seat (64), controls said valve seat (64), wherein, on the valve housing (62), there is formed a hollow-cylindrical housing shaft (68) which is open at one end and in the interior of which the valve closure body (66) is received, and
wherein the valve seat (64) is connected to the housing shaft (68) via an encircling and, in relation to the housing shaft (68), radially outwardly projecting collar (70),
**characterized**
**in that** the collar (70) of the valve housing (62) is formed from two wall portions of the valve housing (62) that are connected to one another at the circumference of the collar (70) and are placed against one another.

2. Pressure-medium control valve according to Claim 1, **characterized**
**in that** a housing cover (84) is fastened to the open end of the housing shaft (68), against which housing cover a valve spring element (78) which acts on the valve closure body (66) is supported.

3. Piston pump (10), in particular for conveying a pressure medium in an electronically slip-controllable vehicle brake system,
having a pump piston (14) which can be driven so as to perform a cyclical reciprocating movement,
having a pump cylinder (12) in which the pump piston (14) is received in an axially displaceable manner,
and having a pressure-medium valve (60) which controls a flow of pressure medium through the piston pump (10),
**characterized**
**in that** the pressure-medium control valve (60) is designed according to one of Claims 1 and 2.

4. Piston pump according to Claim 3,
**characterized**
**in that** the pressure-medium valve (60) is received in a receiving part (42) of a closure plug (40), which closure plug closes off a pump receiving part in a housing block of a pump assembly with respect to the surroundings, wherein
the receiving part (42) is of stepped form in terms of its inner diameter and has a first receiving portion (44), which is relatively large in terms of inner diameter, and has a second receiving portion (46), which is relatively small in terms of inner diameter, and wherein a transition from the first receiving portion (44) to the second receiving portion (46) forms a shoulder (48) on which the pressure-medium valve (60) bears with the collar (70) of the valve housing (62).

5. Piston pump according to Claim 4,
**characterized**
**in that** the shoulder (48) is surrounded circumferentially by an axially projecting flange (50) of the closure plug (40), the inner dimensions of which flange are matched to the outer dimensions of the collar (70) of the valve housing (62) in such a way that a force-fitting connection can be formed between the collar (70) and the flange (50).

6. Piston pump according to Claim 5,
**characterized**
**in that** the flange (50) of the closure plug (40) regionally projects axially in relation to the collar (70) of the valve housing (62), which bears against the shoulder (48), and in that the closure plug (40) is connected in a force-fitting manner to the pump cylinder (12) of the piston pump (10) in the region of this axially projecting flange (50).

7. Piston pump according to one of Claims 4 to 6, **characterized**
**in that** the valve housing (62) of the pressure-medium valve (60) extends into the second receiving portion (46), relatively small in terms of diameter, of the receiving part (42), wherein,
between the valve housing (62) and the wall surrounding the second receiving portion (46) of the receiving part (42), there is an annular gap (72) which is contacted by a rear side, facing away from the valve seat (64), of the valve closure body (66).

## Revendications

1. Soupape de régulation d'agent sous pression (60), destinée en particulier à commander un sens d'écoulement dans un circuit d'agent sous pression, ladite soupape comprenant
un boîtier de soupape (62) réalisé par technique de formage,
un siège de soupape (64) qui est formé d'une seule pièce avec le boîtier de soupape (62) et
un corps de fermeture de soupape (66) qui est reçu dans le boîtier de soupape (62) en étant guidé radialement et de manière mobile axialement et qui commande ce siège de soupape (64) en fonction des conditions de pression régnant en amont et en aval du siège de soupape (64),
un arbre de boîtier cylindrique creux (68), ouvert à l'extrémité, étant formé sur le boîtier de soupape (62) et recevant à l'intérieur le corps de fermeture de soupape (66) et
le siège de soupape (64) étant relié à l'arbre de boîtier (68) par le biais d'une collerette circonférentielle (70) qui fait saillie radialement vers l'extérieur par rapport à l'arbre de boîtier (68), **caractérisé en ce que**
la collerette (70) du boîtier de soupape (62) est formée de deux portions de paroi du boîtier de soupape (62), lesquelles sont placées l'une contre l'autre et reliées l'une à l'autre sur la circonférence de la collerette (70).

2. Soupape de régulation d'agent sous pression selon la revendication 1,
**caractérisée en ce que**
un couvercle de boîtier (84), qui supporte un élément de soupape à ressort (78) agissant sur le corps de fermeture de soupape (66), est fixé à l'extrémité ouverte de l'arbre de boîtier (68).

3. Pompe à piston (10), destinée en particulier à acheminer un agent sous pression dans un système de freinage de véhicule à régulation de glissement électronique, ladite pompe à piston comprenant un piston de pompe (14) entraînable suivant un mouvement de course cyclique,
un cylindre de pompe (12) dans lequel le piston de pompe (14) est reçu de manière coulissante axialement,
et une soupape d'agent sous pression (60) qui commande un écoulement d'un agent sous pression à travers la pompe à piston (10),
**caractérisée en ce que**
la soupape de commande d'agent sous pression (60) est réalisée selon l'une des revendications 1 et 2.

4. Pompe à piston selon la revendication 3, **caractérisée en ce que**
la soupape d'agent sous pression (60) est reçue dans un logement (42) d'un bouchon d'obturation (40) qui ferme un logement de pompe dans un bloc-carter d'un groupe motopompe vis-à-vis de l'environnement,
le diamètre intérieur du logement (42) étant étagé et comportant une première portion de logement (44) de plus grand diamètre intérieur et une deuxième portion de logement (46) de plus petit diamètre intérieur, et
une transition de la première portion de logement (44) à la deuxième portion de logement (46) formant un épaulement (48) sur lequel la soupape d'agent sous pression (60) vient en appui avec la collerette (70) du boîtier de soupape (62).

5. Pompe à piston selon la revendication 4, **caractérisée en ce que**
l'épaulement (48) est entouré circonférentiellement par un collet (50), saillant axialement, du bouchon d'obturation (40), collet dont les dimensions intérieures correspondent aux dimensions extérieures de la collerette (70) du boîtier de soupape (62) de manière à former une liaison en force entre la collerette (70) et le collet (50).

6. Pompe à piston selon la revendication 5, **caractérisée en ce que**
le collet (50) du bouchon d'obturation (40) dépasse axialement par endroits de la collerette (70) du boîtier de soupape (62) en appui sur l'épaulement (48) et **en ce que** le bouchon d'obturation (40) est relié au cylindre de pompe (12) de la pompe à piston (10) au niveau de ce collet (50) saillant axialement.

7. Pompe à piston selon l'une des revendications 4 à 6,
**caractérisée en ce que**
le boîtier de soupape (62) de la soupape d'agent sous pression (60) s'étend jusque dans la deuxième portion de logement (46) de plus petit diamètre du logement (42),
un espace annulaire (72), en contact avec un côté arrière du corps de fermeture de soupape (66) qui est dirigé à l'opposé du siège de soupape (64), étant ménagé entre le boîtier de soupape (62) et la paroi entourant la deuxième portion de logement (46) du logement (42).
